# EUROPEAN PATENT APPLICATION

(11) **EP 1 615 150 A1**
(43) Date of publication of application: **11.01.2006**
(21) Application number: 04405430.2
(22) Date of filing: 08.07.2004
(51) Int. Cl.: G06F 17/50

(54) **Modular engineering of power systems**

(71) Applicant: ABB Technology AG, 8050 Zürich (CH)
(72) Inventor: Westermann, Dirk, 8050 Zürich (CH); Rehtanz, Christian, 5405 Baden-Dättwil (CH); Stürzl, Peter, 79809 Weilheim (DE); Menander, Fredrik, 721 82 Vasteras (SE)
(74) Representative: Zimmermann, Gilbert

(57) **Abstract**

By using a module-based approach for the engineering of power systems the engineering value added is maximized by the elimination of repetitive process steps and error sources. Further advantages are a reduction in the project lead times from tendering up to execution, an optimized usage of the underlying subsystem portfolio, the provision of premium quality documentation, a continuous re-use of proven design modules and a maximum design freedom. The integration of auxiliary or sub-suppliers according to the invention implies that the characteristics of their components are not modified during a first tendering phase. This allows a rapid tender preparation, by explicitly excluding the possibility or obligation to laboriously check for short-term amendments of third party products or services.

## Description

### FIELD OF THE INVENTION

The invention pertains to the field of engineering of industrial plants or facilities, and in particular to the design engineering of power systems such as substations in electric power transmission and distribution grids.

### BACKGROUND OF THE INVENTION

DE-A 42 09 168 discloses a method for an automatic project planning of substation control systems. The project planning tools comprise a basic programme and a library of programme modules that have a general functionality and can be linked together to build functions or steps in sub-procedures. The library is based on object-oriented data modelling. The programme modules can be linked together recursively to build programme modules themselves. Programme modules in one access level interact, and in particular exchange information, with one another dynamically.

The operation of the project planning system comprises: parameterisation of substation information, automatic design of the substation control system, automatic generation of substation diagrams, determination of operating conditions for substation switchboard sections, automatic determination of hardware for assembling the substation, generating tendering information and drawings. Substation parameters obtained during planning can be transferred to hardware components of the substation. Data transparency is achieved in all project phases by object-oriented data handling in connection with universally useable programme modules providing hierarchical parameter inheritance.

The unpublished European Patent Application 03405152.4 relates to a tool for computer-aided substation tendering. A module representing a re-usable, pre-engineered substation component is indexed according to an intuitive multiple-index categorisation system, has a standardized name for designating all its related files and for encoding its function in an intuitively understandable manner, and has a module-descriptor providing standardised information to application routines for cost calculation, technical data accumulation, graphics accumulation and tender text accumulation. The modules may be fixed or parameterised and may be supplied from a third party, and stored in a module library.

The multiple-index categorisation system offers the user, typically a tendering engineer, a plurality of intuitive searching indices for each module and supports a fast and accurate search for desired known or unknown modules. A further improvement is the automatic interfacing of the selected modules to desired application routines. The consistent categorisation and interfacing of modules allows their systematic reuse in project planning and provides a comfortable programming environment to the operator. Overall, the tendering process is accelerated and its quality is improved in all tendering steps, in particular during browsing, assembling, parameterisation and modifying modules and when executing application routines on a project.

In the patent application US 2002/0042696 A1, a utility station automated design system and method configured to allow a user to design a utility station such as a unit substation, and prepare a drawing construction set as well as a cost estimate and materials list is proposed. A computer-based tool has a database that holds both standard "substation templates" (i.e. pre-approved substation layouts) as well as "equipment symbols" (stored in a library and accessible to different users) that may be applied to one another via a graphical user interface. The user is required to select a predetermined "standard" substation architecture (such as a new 115 kV unit substation) and to apply the respective symbols to the selected pre-designed substation template. Subsequently, the user is presented with a series of options regarding which components are to be included. Finally, a list of building materials and cost estimates associated with the respective components in the unit substation are prepared.

Generally, cost estimates, quotations or tenders for utility stations, power systems or other industrial facilities are inaccurate or time-consuming or lack flexibility. In particular, the incorporation of third party products or services and/or the integration of sub-suppliers in the engineering process represent delicate matters.

### DESCRIPTION OF THE INVENTION

It is therefore an objective of the invention to calculate a tender for a power system in a manner that is at the same time rapid, flexible and adapted to incorporate third party products or services. These objectives are achieved by a method of engineering a power system, a method of engineering a substation and a computer program according to claims 1, 8 and 9. Further preferred embodiments are evident from the dependent patent claims.

In a module-based engineering approach according to the invention, a power system is decomposed into a plurality of subsystems, wherein each subsystem in turn comprises a number of components. Every subsystem is represented by a module carrying any kind of information related to the components of the corresponding subsystem. A distinction between a first, primary, preferred or main supplier, termed supplier for ease of reference in what follows, and one or more 3^{rd}-party-suppliers or sub-suppliers is introduced. The latter provide or supply components of subsystems that are not modified during a tendering phase, whereas adaptations of components supplied by the supplier, being executed through reliable communication and short decision paths, can be incorporated at any time. Thus the independence of the supplier from the sub-suppliers is reflected in a way allowing a rapid tender preparation, by explicitly excluding the possibility or obligation to laboriously check for short-term amendments of third party products or services. In other words, a reduction in tender preparation time is achieved at the expense of flexibility.

In a first preferred variant of the invention, during a so-called design-engineering phase comprising the tender preparation, a functional or operational behaviour of the power system related to its design is estimated as well. To that purpose, technical information of the modules is enhanced with mathematical models of the corresponding subsystem or the components comprised therein, respectively. This information is evaluated in view of nominal or exceptional operating conditions of the power system. The mathematical models account for electromechanical forces, e.g. acting on a support structure in case of fault currents, or forces due to earthquakes, wind or thermal expansion of the components. Likewise, the model accounts for electrical properties, such as creepage distance to be observed at nominal currents, maximum electrical fields to be graded in case of fault currents, dimensioning of groundings and insulation-coordination. In addition, stochastic models for failure probability calculation and reliability analysis of the entire power system are included and provide e.g. a lifecycle cost analysis. Even dynamic simulation and power flow calculation of the power system and its environment, i.e. an entire power grid, may be the object of this kind of estimations.

Again, the fact that the sub-suppliers are not involved during the estimation of the operational behaviour, and the technical information related to their components is not being changed during the estimation, allows the engineer to establish a technical feasibility of a power system rapidly, with high accuracy and at a very early stage of a project. Following this estimation, a more detailed design analysis may be made in subsequent phases, and the results of the behaviour under exceptional conditions may be exploited in view of an alleviation of overly conservative security margins.

In a second preferred variant of the inventive process, the design-engineering phase distinguishes between a base-engineering phase comprising the preparation of a first or budgetary tender without third-party involvement, and a subsequent detail-engineering phase during which an alteration of the information attached to the modules and related to the components supplied by sub-suppliers is executed. Before consulting the sub-suppliers, a list of parts or bill of quantity for the power system under consideration, and based on the technical information of the modules selected, is preferably established. This allows not only to derive statistics and technology developments, but also to negotiate volume agreements with the sub-suppliers during the detail-engineering phase. A second or sharp tender generally concludes this detail-engineering phase.

In a third preferred variant of the inventive process, the set of modules representing the known subsystems is cyclically or occasionally updated. New modules representing subsystems that have been adapted, configured or in any other way altered during an engineering process are incorporated, i.e. added to the set of modules, and may as such be selected in a subsequent engineering project. This re-use of modules representing changed project information and structures avoids double design efforts and improves the overall design quality.

The controlled updating or re-use process is not limited to the module-level, but applicable to entire power systems or parts thereof as well. Executed projects or existing substation designs can subsequently be compared to new projects or substation designs.

In a further preferred embodiment of the invention, the engineering process is supported by a software platform, and the modules are stored in a database or library. Instances of the modules are created and transferred or downloaded to a dedicated engineering space or tender-file-structure. Only this instance of the original module is then subjected to an alteration. This supports the aforementioned module maintenance and updating process, as the original modules or templates remain in the library and can be re-used again in a further engineering project. A single module library with a uniform categorisation system is preferred, including even the modules that are provided and maintained by third parties, and necessitating that the modules are equipped with unified software interfaces to be accessed by application routines.

During the detail-engineering phase, the sub-suppliers are contacted by means of a request for quotation being automatically sent by the software platform, preferably in the form of an XML table. The response, i.e. price, delivery time, documents etc., from the sub-suppliers are returned and fed into a suitably adapted module based design system.

By using a module-based engineering approach the engineering value added is maximized by the elimination of repetitive process steps and error sources. Further advantages are a reduction in the project lead times from tendering up to execution, an optimized usage of the underlying subsystem portfolio, the provision of premium quality documentation, a continuous re-use of proven design modules and a maximum design freedom. By way of example, bid and proposal efficiency for substations is increased considerably and allows preparation of a budgetary tender in a couple of hours. The integration of sub-suppliers according to the invention simplifies logistics and reduces costs via pooling effects such as a reduction on the number of sub-suppliers and the negotiation of volume agreements. It is also compatible with a low business volume.

### BRIEF DESCRIPTION OF THE DRAWINGS

The subject matter of the invention will be explained in more detail in the following text with reference to preferred exemplary embodiments which are illustrated in the attached drawings, in which:
Fig. 1 schematically shows the principal engineering steps, and
Fig.2 depicts a modular design of a substation.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

According to the invention, a so-termed supplier and one or more sub-suppliers different from the supplier do provide or supply components involved in the engineering of power systems. The distinction may be based on a differing legal entity, a differing geographical location of the respective premises, or a differing enterprise resource planning system (ERP) or some other internal vs. external criterion. Likewise, the distinction may reside in the fact that the information exchange and/or database updating possibilities or schedules between the supplier and the sub-suppliers have been restricted deliberately or are found suboptimal for a technical reason.

The supplier generally is the main or primary contractor of the customer and responsible for the tendering and detail-engineering of the power system as detailed below. On the other hand, a base-engineering preceding the detail-engineering may be done by the customer himself or a third party, its result then being transmitted to the supplier for further handling.

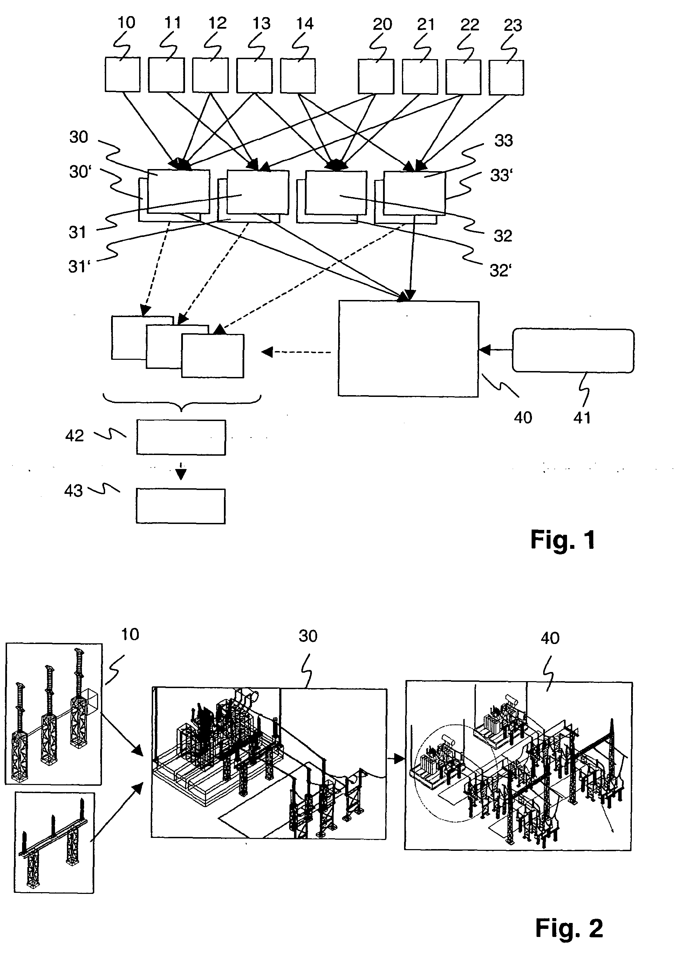

Fig.1 depicts the main engineering or planning steps, with components 10 - 14 being supplied by the supplier and components 20 - 23 being supplied by sub-suppliers. Subsystems 30 - 33 are the smallest pre-engineered entities built from these components, based on which a power system or a part thereof may be designed. It is to be noted that the supplier and the sub-suppliers may actually offer the same or at least similar components, and that a subsystem may comprise exclusively components from one sub-supplier. The term components is intended to encompass both items or pre-fabricated products as well as tasks or services to be executed during execution phase of the project, i.e. during the installation or construction of the power system. For the particular case of a substation being engineered, Fig.2 below enumerates possible subsystems and components.

In order to facilitate the engineering process, each subsystem 30 - 34 is represented by a template or module 30' - 33'. Each module has attached to it or comprises information about the technical and economical aspects of the components that make up the subsystem. The former include specifications, layouts, a bill of quantity (or other information based on which the bill of quantity can be generated) comprising the number of occurrences of each component in the subsystem, plans or drawings, electrical diagrams and the like, whereas the latter include indications on suppliers, stock or availability, costs etc. Based on the customer's requirements or project specifications 41, those modules 30', 31', 33' representing the subsystems 30, 31, 33 of which a particular power system 40 is composed, are selected during a design-engineering phase. The economical information attached to the modules selected is evaluated and turned into a first tender 42. While generally the components supplied by the supplier, to which the design engineer belongs or is most closely linked, are configurable according to the specific requirements of a particular power system during this tendering phase, no adaptation whatsoever is permitted for those components supplied by sub-suppliers. Accordingly, sub-suppliers are not involved during the tender preparation, i.e. before order intake, and the aforementioned distinction between the suppliers is exploited in order to freeze certain information during the tendering phase. As a special case of this process, the cost information related to the sub-suppliers' components is suppressed altogether in the first tender. The independence of the primary supplier from the auxiliary supplier is reflected in this way, allowing a rapid processing without the possibility or obligation to laboriously check for short-term amendments of third-party products or services. Contrary to this, adaptations or amendments to components supplied by the supplier are executed through proven communication and decision paths and not impeded by any technical or logistical obstacle.

Following the issuance of a first or budgetary tender, and at the latest upon order intake, a final or sharp tender 43 may be prepared during a detail-engineering phase following the initial base-engineering phase. To that purpose, the sub-suppliers that offer one or more components comprised in the subsystems of the particular power system are contacted. The detail-engineering phase refines the initial design and also involves planning of the execution or installation tasks. The latter being most often executed by sub-contractors located near the construction site of the power system, information exchange and update is a prerequisite dominant over time issues during this process phase. Likewise, a list of parts or bill of quantity (BOQ) for the particular power system is established by adding up identical components comprised in the various subsystems involved. The result may be submitted to the sub-suppliers offering the components in order to negotiate volume agreements.

In the inventive process, the set of modules is cyclically or at least occasionally maintained via adding new modules and eventually eliminating old modules. Completely new modules are created from scratch following new market-trends or technology developments, and their creation may be triggered by the emergence of new components provided by the suppliers. Module creation and updating may be done by a design- or construction engineer or by a third party independent from the supplier, in which latter case modules comprising exclusively components from sub-suppliers may be explicitly excluded from being altered by the supplier's engineer.

Modules and the corresponding subsystems may also be updated at various stages during the engineering process. For instance, modules from the supplier selected for a particular power system may be configured or adapted, e.g. following changes in the customer specifications, to an arbitrary extent during all engineering phases. The same applies to modules from sub-suppliers before or after the first tendering phase. From any such configuration or adaptation, a new module with considerable re-use potential may arise and will be returned to and included as a new standard or template in the original set of modules by a controlled process in order to fulfil certain quality standards. In this first updating scenario, the original module from which a new module stems generally continues to exist in parallel with the new one. The re-use of a module adapted for the needs of a particular power system in a subsequent engineering phase facilitates the job of the design engineer.

The co-existence of the original and the updated module is not necessarily true if a potentially minor alteration or amendment has the character of an error correction or bug fixing or other fine-tuning. In this second updating scenario, the result of the alteration is automatically returned to the original set of modules, and the original module is replaced with the new, amended module..

A preferred embodiment of the inventive processes is concerned with the engineering of substations in an electricity transmission and/or distribution grid. As indicated in Fig.2, the substation (40) is composed of subsystems (30) on bay level such as switchgears, incoming lines, outgoing feeders, control and protection packages, and comprising components such as switches, support structures (10) and sockets of concrete for the switches, instrument transformers or other sensors, electrical wiring etc. It is estimated that approximately ten to thirty different modules are selected during the design-engineering of a substation. In general the adaptation or customization of a module reflects the in-depth design of parts of a substation according to customers specification (i.e. particular colours, special screws and washers, surface finish, detailed topographical layout, etc). By virtue of the two step approach a considerably restricted number of modules are sufficient to cover the full variety of customer specifications.

The automotive industry or any other product-manufacturing industry offers a limited number of products (i.e. cars) with a certain number of configurations (e.g. colour) that may be chosen by the customer before the product is finally assembled in one facility or place. Returning to the power systems and in particular to the preferred embodiment of a substation design, the abovementioned product-oriented approach would imply a limited number of pre-defined substation layouts with, e.g. optimized logistics and minimized costs, but with no changes to the layouts possible. The only alternatives available to the design engineer reside in a number of configurations applicable to a substation layout approximating the requirements of the customer of a particular substation.

Contrary to any product-oriented approach, the present invention is concerned with the integration or engineering of power systems, wherein each power system is different from all other power systems at least in respect of its location or geographical coordinates. That is, unlike two identical cars manufactured at one particular production site, power systems are constructed all over the world, and even if identical subsystems were involved, sub-suppliers of third-party components and tasks or services related to the actual construction or erection process are advantageously chosen locally, which induces a considerable difference even between apparently identical power systems and results in a virtually unlimited number of variants.

The underlying IT infrastructure comprises a design-engineering means for system configuration based on modules. Data processing device signifies a computing system having software and hardware, such as standard software installations (e. g. MS-Office and Intranet access) and preferably a CAD-system (e.g. Bentley microstation V8) for composing drawings.

The engineering processes described in the foregoing with respect to power systems are applicable to other types of industrial plants or facilities as well without departing from the spirit of the invention. For example, water facilities encompass wells, pump stations, lift station, pressure regulator stations, complex piping arrangements, etc. Gas facilities involve interconnects with other pipeline companies' facilities, regulator stations, metering stations, pressure and flow monitoring equipment compressor stations, etc.

### LIST OF DESIGNATIOINS

- 10-14: components supplied by primary supplier
- 20-23: components supplied by auxiliary supplier
- 30-33: subsystems
- 30'-33': modules representing the subsystems
- 40: power system
- 41: system or project specifications
- 42: first or budgetary tender
- 43: second or sharp tender

## Claims

1. Method of engineering a power system (40) composed of a plurality of subsystems (30, 31, 33), each subsystem comprising a number of components (10-23) and each component being supplied by a supplier or a sub-supplier, the method comprising the steps of
- providing a set of modules (30'-33'), each module representing a subsystem and comprising information related to the components of the subsystem,
- design-engineering the power system by selecting, from the set of modules, those modules (30', 31', 33') representing the subsystems composing the power system,
wherein the design-engineering comprises
- preparing a tender (42) for the power system based on the information of the selected modules, wherein the information related to components supplied by a sub-supplier remain unaltered during the preparation of the tender.

2. The method according to claim 1, wherein the design-engineering further comprises
- estimating an operational behaviour of the power system based on the information of the selected modules, wherein the information related to components supplied by a sub-supplier remain unaltered during the estimation of the operational behaviour.

3. The method according to claim 1, wherein the design-engineering further comprises
- detail-engineering the power system following the preparation of the tender, wherein sub-suppliers of components are contacted and information related to their components is updated.

4. The method according to claim 3, wherein the detail-engineering further comprises
- establishing a bill of quantity for the power system based on the technical information of the selected modules.

5. The method according to claim 1, further comprising the step of
- maintaining the set of modules by adding new modules representing new subsystems, a new module stemming from an adaptation of an existing module to the specifications of a particular power system.

6. The method according to claim 3, wherein the modules are computer program modules stored in a library on a central server, further comprising
- transferring instances of the selected modules to a engineering space prior to altering the information of the instances.

7. The method according to claim 6, further comprising
- sending out, during a detail-engineering phase, a request for quotation to the sub-suppliers and receiving a bid from the sub-suppliers by a module based design system.

8. A method of engineering a substation in an electricity transmission or distribution grid according to claim 1.

9. A computer program that, when loaded into the memory of a computer, executes the method according to claim 6.
